# EUROPÄISCHE PATENTANMELDUNG

(11) **EP 4 717 083 A1**
(43) Veröffentlichungstag der Anmeldung: **01.04.2026**
(21) Anmeldenummer: 25201867.6
(22) Anmeldetag: 12.09.2025
(51) Int. Cl.: A01K 9/00

(54) **SÄUGVORRICHTUNG**

(30) Priorität: 26.09.2024 DE 102024127951
(71) Anmelder: Albert Kerbl GmbH, 84428 Buchbach (DE)
(72) Erfinder: Kerbl, Ulli, 84428 Buchbach (DE)
(74) Vertreter: Kalkoff & Partner Patentanwälte mbB

(57) **Zusammenfassung**

Die Erfindung betrifft eine Säugvorrichtung zur Verbindung mit einem Tränkebehälter, insbesondere einem Tränkeeimer, mit einem Sauger mit einer Austrittsöffnung und einer Eintrittsöffnung, einem Grundkörper mit einer Einlassöffnung und einer Auslassöffnung, einem Befestigungselement zur lösbaren Festlegung des mit seiner Eintrittsöffnung im Bereich der Auslassöffnung des Grundkörpers angeordneten Saugers an dem Grundkörper und einer einen Flüssigkeitsstrom in Richtung auf die Austrittsöffnung freigebenden und in Richtung auf die Einlassöffnung blockierenden Ventileinheit. Um eine einfach aufgebaute Säugvorrichtung bereitzustellen, die sich kostengünstig herstellen und leicht montieren lässt und dabei zuverlässig einen Rückfluss von Tränkeflüssigkeit verhindert, ist vorgesehen, dass die Ventileinheit ein Basiselement aufweist, dass mit einem Grundkörperabschnitt innerhalb einer an die Auslassöffnung angrenzenden Ausnehmung angeordnet ist und mit einem zwischen einer eine Zuführkanalaustrittsöffnung verschließenden Sperrstellung und einer die Zuführkanalaustrittsöffnung freigebenden Öffnungsstellung verstellbaren Ventilelement verbunden ist.

## Beschreibung

Die Erfindung betrifft eine Säugvorrichtung zur Verbindung mit einem Tränkebehälter, insbesondere einem Tränkeeimer, mit
- einem Sauger mit einer Austrittsöffnung und einer Eintrittsöffnung,
- einem Grundkörper mit einer Einlassöffnung und einer Auslassöffnung,
- einem Befestigungselement zur lösbaren Festlegung des mit seiner Eintrittsöffnung im Bereich der Auslassöffnung des Grundkörpers angeordneten Saugers an dem Grundkörper und
- einer einen Flüssigkeitsstrom in Richtung auf die Austrittsöffnung freigebenden und in Richtung auf die Einlassöffnung blockierenden Ventileinheit.

Säugvorrichtungen der eingangs genannten Art sind in vielfältigen Ausgestaltungen aus dem Stand der Technik bekannt. Mit einer Säugvorrichtung ausgestattete Tränkebehälter, bevorzugt Tränkeeimer, werden dazu benutzt, um Jungtiere mit einer im Tränkebehälter angeordneten Flüssigkeit zu füttern. Die Säugvorrichtung erstreckt sich dabei durch eine vorzugsweise im Bodenbereich eines Tränkeeimers angeordnete Behälteröffnung in der Behälterwand und erlaubt es dem zu säugenden Tier, die in dem Behälter befindliche Flüssigkeit über den üblicherweise flexibel ausgestalteten Sauger zu entnehmen, wobei aufgrund des beim Saugen entstehenden Unterdrucks die im Tränkebehälter angeordnete Flüssigkeit durch den Grundkörper über den Sauger zur Austrittsöffnung strömt, aus der dann die Flüssigkeit austritt.

Für einen störungsfreien Betrieb ist es von besonderer Bedeutung, dass die Säugvorrichtung der Gebrauchslage, d. h. in der zur Nutzung an den Tränkebehälter montierten Position, in sich flüssigkeitsdicht sowie flüssigkeitsdicht mit dem Tränkebehälter verbunden ist, um ein unkontrolliertes Austreten der Flüssigkeit zu vermeiden.

Ein wichtiges Element der Säugvorrichtung ist ferner eine üblicherweise als "Rückschlagventil" bezeichnete Ventileinheit, welche in Richtung auf die Austrittsöffnung des Saugers strömende Flüssigkeit passieren lässt, jedoch eine in Richtung auf die Eintrittsöffnung des Saugers wirkende Rückströmung der Tränkeflüssigkeit blockiert. Eine solche Rückströmung resultiert dabei aus einer Druckerhöhung im Inneren des Saugers, welche durch eine beim Trinken auftretende Kompression des Saugers hervorgerufen wird. Die Ventileinheit verhindert sowohl, dass mit der zurückströmenden Flüssigkeit Verunreinigungen in die Tränkeflüssigkeit gelangen, als auch, dass es aufgrund des hohen Flüssigkeitsdruck zu einem Herausspritzen der Flüssigkeit aus der Oberseite des Tränkebehälters kommt.

Bekannte Säugvorrichtungen weisen den Nachteil auf, dass diese einen sehr komplexen Aufbau, einschließlich speziell geformter Sauger sowie kompliziert ausgebildeter Ventileinheiten aufweisen, damit die Säugvorrichtungen die notwendige Dichtigkeit sowie die Sicherheit gegen einen Rückfluss von Tränkeflüssigkeit bieten. Die Komplexität hat dabei unter anderem zufolge, dass die bekannten Saugvorrichtungen aufgrund spezieller Ventileinheiten aufwendig zu montieren und nur schwer zu reinigen sind sowie hohe Herstellungskosten aufweisen.

Hiervon ausgehend liegt der Erfindung die Aufgabe zugrunde, eine einfach aufgebaute Säugvorrichtung bereitzustellen, die sich kostengünstig herstellen und leicht montieren lässt und dabei zuverlässig einen Rückfluss von Tränkeflüssigkeit verhindert.

Die Erfindung löst die Aufgabe durch eine Säugvorrichtung mit den Merkmalen des Anspruchs 1. Vorteilhafte Weiterbildungen der Säugvorrichtung sind in den abhängigen Ansprüchen 2 bis 10 angegeben.

Die erfindungsgemäße, mit einem Tränkebehälter, insbesondere einem Tränkeeimer verbindbare Säugvorrichtung weist einen üblicherweise aus einem elastischen Material hergestellten Sauger auf, welcher von einem zu säugenden Tier, bspw. einem Kalb mit seinem Maul aufgenommen werden kann. Aufgrund des beim Saugen entstehenden Unterdrucks strömt die in einem Tränkebehälter angeordnete Flüssigkeit durch die Säugvorrichtung bis zur Austrittsöffnung des Saugers, aus der die Tränkeflüssigkeit dann austritt. In der Gebrauchslage, d.h. in der montierten Lage der Säugvorrichtung an dem Tränkebehälter, in der diese dazu genutzt werden kann, das Vieh zu säugen, gelangt die Tränkeflüssigkeit dabei über einen Grundkörper in den Sauger, wobei der Grundkörper mit einer Einlassöffnung innerhalb des Tränkebehälters angeordnet und mit einer Auslassöffnung mit einer Eintrittsöffnung des Saugers verbunden ist. Zur flüssigkeitsdichten Verbindung des Saugers mit dem Grundkörper dient dabei ein Befestigungselement, welches üblicherweise auch dazu verwendet wird, die Säugvorrichtung an dem Tränkebehälter festzulegen. Das Befestigungselement übt im zusammengebauten Zustand der Säugvorrichtung, bzw. der Gebrauchslage, eine Vorspannung auf den Grundkörper sowie auf den mit seiner Eintrittsöffnung im Bereich der Auslassöffnung des Grundkörpers angeordneten Sauger aus, wodurch - insbesondere aufgrund der elastischen Materialeigenschaften des Saugers - eine Abdichtung der Säugvorrichtung sowie der Verbindung der Säugvorrichtung und dem Tränkebehälter erreicht wird.

Zur Vermeidung einer Rückströmung, welche insbesondere aus der Kompression des elastischen Saugers beim Saugen und des dabei entstehenden Drucks innerhalb des Saugers resultiert, weist die Säugvorrichtung eine Ventileinheit auf, welche eine Rückströmung von Tränkeflüssigkeit in Richtung auf die Einlassöffnung des Grundkörpers blockiert. Kennzeichnend für die erfindungsgemäße Säugvorrichtung ist dabei, dass die Ventileinheit ein Basiselement aufweist, das
- mit einem Grundkörperabschnitt innerhalb einer an die Auslassöffnung angrenzenden Ausnehmung angeordnet ist und
- mit einem zwischen einer eine Zuführkanalaustrittsöffnung verschließenden Sperrstellung und einer die Zuführkanalaustrittsöffnung freigebenden Öffnungsstellung verstellbaren Ventilelement verbunden ist.

Erfindungsgemäß gelangt die Flüssigkeit beim Saugen über die Einlassöffnung des Grundkörpers in einen Zuführkanal. An dem der Einlassöffnung gegenüberliegenden Ende des Zuführkanals tritt die Flüssigkeit aus der Zuführkanalaustrittsöffnung in eine Ausnehmung des Grundkörpers aus, von der aus die Flüssigkeit dann über die Auslassöffnung in den Sauger gelangt. Die erfindungsgemäße Ventileinheit weist ein Basiselement auf, das mit einem Grundkörperabschnitt innerhalb der an die Auslassöffnung angrenzenden Ausnehmung angeordnet ist. Weiter weist die Ventileinheit ein mit dem Basiselement verbundenes Ventilelement auf, das zwischen einer die Zuführkanalaustrittsöffnung verschließenden Sperrstellung, in der das Ventilelement einen Flüssigkeitsübertritt zwischen dem Zuführkanal und der Ausnehmung blockiert und einer die Zuführkanalaustrittsöffnung freigebenden Öffnungsstellung verstellbar ist, in der Tränkeflüssigkeit ungehindert zwischen der Ausnehmung und dem Zuführkanal fließen kann.

Die Ventileinheit ist derart ausgebildet, dass dieses ein in Richtung auf die Austrittsöffnung des Saugers gerichtete Flüssigkeitsströmung freigibt, hingegen eine Rückströmung in Richtung auf die Einlassöffnung des Grundkörpers blockiert. Besonders bevorzugt ist dabei vorgesehen, dass die Ventileinheit derart ausgebildet ist, dass das Ventilelement im unbelasteten Zustand, d.h., wenn keine Flüssigkeit durch die Säugvorrichtung strömt, in der Sperrstellung angeordnet ist, in der die Zuführkanalaustrittsöffnung verschlossen ist. Der beim Saugen entstehende Unterdruck bewirkt eine Verlagerung des Ventilelements aus der Sperrstellung in die Öffnungsstellung, sodass dann die Tränkeflüssigkeit über die Austrittsöffnung aus dem Sauger entnommen werden kann. Eine durch eine Saugerkompression bewirkte Rückströmung der Tränkeflüssigkeit bewirkt hingegen eine Rückverlagerung des Ventilelements aus der Öffnungsstellung in die Sperrstellung, in der die Zuführkanalaustrittsöffnung verschlossen und somit eine Rückströmung von Flüssigkeit in den Tränkebehälter verhindert werden kann.

Die erfindungsgemäß ein Basiselement und ein Ventilelement aufweisende Ventileinheit lässt sich besonders einfach und kostengünstig herstellen und gewährleistet dabei über einen Verschluss der Zuführkanalaustrittsöffnung eine zuverlässige Strömungskontrolle der Tränkeflüssigkeit. Die als Baueinheit vorliegende Ventileinheit lässt sich darüber hinaus besonders zuverlässig über den Grundkörperabschnitt des Basiselements positionssicher an der Säugvorrichtung anordnen, sodass auch eine positionssichere Anordnung des mit dem Basiselement verbundenen Ventilelements gegenüber der Zuführkanalaustrittsöffnung erfolgen kann. Die Ventileinheit bildet somit eine handhabbare Baueinheit, welche als Ganzes montiert, demontiert und ausgerichtet werden kann.

Nach einer weiteren Ausgestaltung der Erfindung ist ferner vorgesehen, dass das Basiselement einen Saugerabschnitt aufweist, der im Bereich der Eintrittsöffnung innerhalb des Saugers angeordnet ist. Eine entsprechende Ausgestaltung der Säugvorrichtung gewährleistet eine besonderes zuverlässige Verbindung des Basiselements sowohl mit dem Grundkörper über dem Grundkörperabschnitt als auch mit dem Sauger über den Saugerabschnitt, sodass eine ortsfeste und flüssigkeitsdichte Verbindung in besonders zuverlässiger Weise gewährleistet werden kann. Gleichzeitig wird über die ortsfeste Anordnung des Ventilelements an dem Basiselement eine einfache Ausrichtung des Ventilelements gegenüber der Zuführkanalaustrittsöffnung gewährleistet.

Gemäß einer vorteilhaften Weiterbildung der Erfindung ist vorgesehen, dass der Grundkörperabschnitt der Ventileinheit und die den Grundkörperabschnitt aufnehmende Auslassöffnung des Grundkörpers derart aufeinander abgestimmt sind, dass die Ventileinheit nur in einer Position an dem Grundkörper angeordnet werden kann. Dies kann bspw. durch eine entsprechende polygonale Kontur des Grundkörperabschnitts und der den Grundkörperabschnitt aufnehmenden Auslassöffnung oder die Anordnung einer oder mehrerer sich in radialer Richtung erstreckender Vorsprünge an dem Grundkörperabschnitt und zu den Vorsprüngen korrespondierender, radial ausgerichteter Ausnehmungen an der Auslassöffnung erreicht werden.

Durch diese Weiterbildung der Erfindung wird eine zuverlässige Ausrichtung eines mit dem Grundkörperabschnitt verbundenen Ventilelements, bspw. einer Ventilklappe, gegenüber der Zuführkanalaustrittsöffnung gewährleistet und eine die Funktion störende Fehlpositionierung während der Montage wirksam vermieden.

Die Ausgestaltung der Verbindung des Ventilelements mit dem Basiselement ist grundsätzlich frei wählbar. Nach einer besonders vorteilhaften Ausgestaltung der Erfindung ist vorgesehen, dass das Ventilelement in Richtung auf die Schließstellung vorgespannt ist. Diese Ausgestaltung gewährleistet in besonders zuverlässiger Weise, dass keine Flüssigkeit, welche bereits aus der Zuführkanalaustrittsöffnung ausgetreten ist, in den Tränkebehälter zurückgelangt. Auch im unbelasteten Zustand des Saugers, d. h., wenn weder ein während des Saugens herrschender Unterdruck anliegt, noch eine Rückströmung aufgrund einer Kompression des Saugers vorliegt, gelangt keine Flüssigkeit zurück in den Tränkebehälter, wo diese zu einer Verunreinigung der Tränkeflüssigkeit innerhalb des Tränkebehälters führen könnte.

Die Ausgestaltung des Ventilelements selbst ist ebenfalls grundsätzlich frei wählbar. Nach einer vorteilhaften Ausgestaltung der Erfindung ist jedoch vorgesehen, dass das Ventilelement als an die Zuführkanalaustrittsöffnung angepasste Klappe ausgebildet ist. Diese Ausgestaltung der Erfindung gewährleistet eine gute und schnelle Öffnungssowie Schließbewegung des Ventilelements, nachdem die Ventilklappe, bei der es sich um ein Element handelt, das nur eine geringe Dicke aufweist und an die Zuführkanalaustrittsöffnung angepasst ist, eine nur geringe Masse aufweist. Darüber hinaus lässt sich das Ventilelement gemäß dieser Ausgestaltung als Klappe besonders einfach und kostengünstig herstellen, sowie in seiner Form an die Zuführkanalaustrittsöffnung anpassen.

Eine Ausgestaltung der Ventileinheit derart, dass das Ventilelement zwischen der Öffnungsstellung und der Sperrstellung verstellbar ist, ist grundsätzlich frei wählbar. Nach einer vorteilhaften Ausgestaltung der Erfindung ist jedoch ein flexibles Verbindungselement vorgesehen, das einenends mit dem Ventilelement und anderenends mit dem Basiselement verbunden ist. Über die flexible Ausgestaltung des Verbindungselements, welches zur Verbindung des Ventilelements mit dem Basiselement dient, wird eine zuverlässige Verstellung des Ventilelements zwischen der Sperrstellung und der Öffnungsstellung gewährleistet, wobei hierzu die Flexibilität des Verbindungselements derart ausgebildet ist, dass der beim Saugen auftretende Unterdruck ausreichend ist, um eine Verstellung des flexiblen Verbindungselement zu gewährleisten, sodass das mit dem Verbindungselement verbundene Ventilelement aus der Sperrstellung in die Öffnungsstellung verlagert wird. Die Verwendung eines flexiblen Verbindungselements zeichnet sich somit dadurch aus, dass es in zuverlässiger Weise eine Verstellung des Ventilelements zwischen der Öffnungsstellung und der Sperrstellung gewährleistet, gleichzeitig auch eine einfache Herstellung der Ventileinheit ermöglicht.

Nach einer besonders vorteilhaften Ausgestaltung der Erfindung ist dabei vorgesehen, dass das flexible Verbindungselement das Ventilelement in Richtung auf die Schließstellung vorspannt. Demgemäß ist vorgesehen, dass in der unbelasteten Stellung, in der die Ventileinheit in der Säugvorrichtung montiert ist, das flexible Verbindungselement das Ventilelement in Richtung auf die Schließstellung vorspannt, sodass eine zuverlässige Abdichtung der Zuführkanalaustrittsöffnung auch im unbelasteten Zustand der Säugvorrichtung vorliegt. Die Verwendung eines flexiblen Verbindungselements zeichnet sich dabei dadurch aus, dass dieses in besonders einfacher Weise so ausgebildet werden kann, dass es eine Vorspannung in Richtung auf die Schließstellung erzeugt. Die als Baueinheit ausgebildete Ventileinheit aus den drei Komponenten Basiselement, Ventilelement und Verbindungselement lässt sich dabei besonders einfach und zuverlässig in der für den Betrieb der Säugvorrichtung notwendigen Position an dem Grundkörper anordnen.

Nach einer besonders vorteilhaften Ausgestaltung der Erfindung ist vorgesehen, dass das flexible Verbindungselement zur Verstellung des Ventilelements aus der Schließstellung in die Öffnungsstellung elastisch verformbar, insbesondere biegbar ist. Eine entsprechende Ausgestaltung des Verbindungselements als flexibles, elastisch verformbares Bauteil zur Verbindung des Ventilelements mit dem Basiselement erlaubt es, auf weitere Bauteile zur zuverlässigen Herstellung des Ventilelements zu verzichten. Eine elastische Verformbarkeit, insbesondere Biegbarkeit erlaubt ein Verschwenken des Ventilelements zwischen der Öffnungsstellung und der Schließstellung gegenüber dem Basiselement. Die elastische Verformbarkeit, insbesondere Biegbarkeit, gewährleistet dabei in zuverlässiger Weise eine dauerhafte zuverlässige Funktion der Ventileinheit. Darüber hinaus lässt sich die Ventileinheit besonders einfach und kostengünstig herstellen, wobei insbesondere die Verwendung eines elastisch verformbaren flexiblen Verbindungselements zur Kostenersparnis beiträgt. Die vorzugsweise vorgesehene Biegbarkeit gewährleistet dabei in besonderem Maße, dass das Ventilelement zuverlässig in der Sperrstellung in einer die Zuführkanalaustrittsöffnung verschließenden Position angeordnet ist.

Besonders vorteilhafterweise ist dabei vorgesehen, dass das Basiselement und das Ventilelement, bevorzugt das Basiselement, das Ventilelement und das flexible Verbindungselement einstückig ausgebildet sind, wobei besonders bevorzugt das flexible Verbindungselement nach Art eines Filmscharniers ausgebildet ist. Die besonders vorteilhafterweise vorgesehene Ausgestaltung des Verbindungselements als Filmscharnier ermöglicht es, das Basiselement vollständig aus dem gleichen Material zu fertigen. Die Herstellungskosten können damit in ergänzender Weise gesenkt werden, nachdem aufgrund der Einstückigkeit zudem auf einen Zusammenbau der Ventileinheit verzichtet werden kann. Durch die einstückige Fertigung wird somit insgesamt die Teilezahl der Säugvorrichtung im Vergleich zum mehrteiligen Ventileinheiten reduziert. Dies erlaubt nicht nur eine besonders wirtschaftliche Fertigung, sondern vereinfacht auch die Montage und Demontage der Säugvorrichtung, bspw. zum Zwecke einer Reinigung.

Besonders vorteilhafterweise ist dabei vorgesehen, dass das Basiselement, das Ventilelement und das Verbindungselement einstückig im Spritzgussverfahren hergestellt sind. Die konkrete Ausgestaltung des Ventilelements derart, dass es in der Schließstellung einen Verschluss der Zuführkanalaustrittsöffnung bewirkt, ist grundsätzlich frei wählbar. Nach einer besonders vorteilhaften Ausgestaltung der Erfindung ist jedoch vorgesehen, dass das Ventilelement einen an die Zuführkanalaustrittsöffnung angepassten, kugelkalottenförmigen Abschnitt aufweist. Diese Ausgestaltung der Erfindung gewährleistet in besonderem Maße, dass es in der Schließstellung zu einem zuverlässigen Verschluss der Zuführkanalaustrittsöffnung kommt. Überdies gewährleistet die kugelkalottenförmige Ausgestaltung im Falle einer durch eine Saugerkompression hervorgerufenen Erhöhung des Flüssigkeitsdrucks, dass das Ventilelement zuverlässig in seiner Position verleibt, wobei der erzeugte Flüssigkeitsdruck zu einer ergänzenden Positionssicherung des Ventilelements in der Zuführkanalaustrittsöffnung sorgt.

Ein Ausführungsbeispiel der Erfindung wird nachstehend mit Bezug auf die Zeichnungen erläutert. In den Zeichnungen zeigen:
- Fig. 1: in einer perspektivischen Darstellung eine Explosionsansicht einer Säugvorrichtung;
- Fig. 2: in einer perspektivischen Ansicht eine Schnittansicht der Säugvorrichtung von Fig. 1 an einem Tränkeeimer und
- Fig. 3: eine perspektivische Ansicht einer Ventileinheit der Säugvorrichtung von Fig. 1.

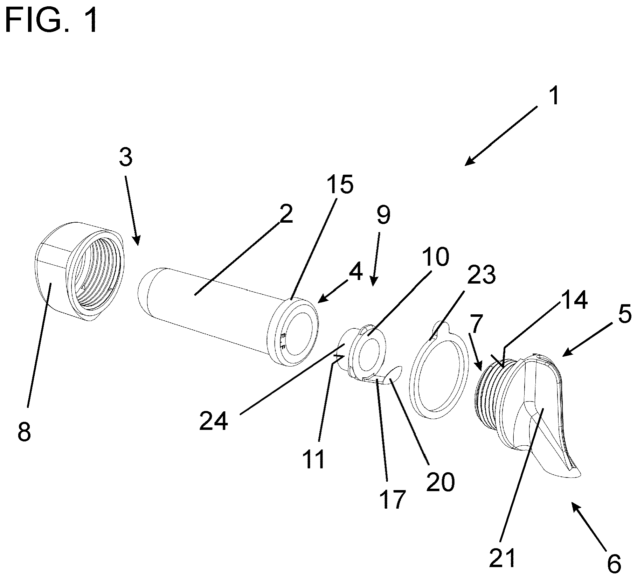

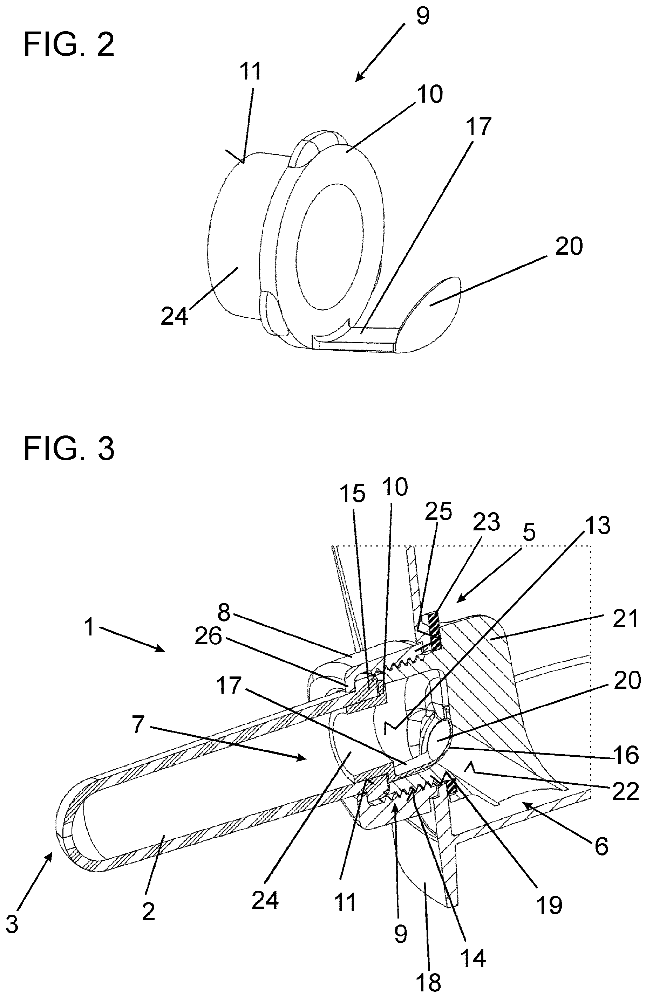

Figur 1 zeigt eine Ausführungsform einer Säugvorrichtung 1 in einer Explosionsansicht. Die Säugvorrichtung 1 weist dabei einen aus einem elastischen Material hergestellten Sauger 2 mit einer Austrittsöffnung 3 und einer Eintrittsöffnung 4 auf. In einer in Figur 3 dargestellten, montierten Gebrauchslage der Säugvorrichtung 1, in der diese an einem Tränkebehälter 18 angeordnet ist, erstreckt sich die Säugvorrichtung 1 durch eine Behälteröffnung 19 des Tränkebehälters 18, sodass ein zu säugendes Tier eine innerhalb des Tränkebehälters 18 angeordnete Tränkeflüssigkeit über die Austrittsöffnung 3 entnehmen kann.

Zur Festlegung der Säugvorrichtung 1 an dem Tränkebehälter 18 weist die Säugvorrichtung 1 einen Grundkörper 5 auf, welcher sich durch die Behälteröffnung 19 hindurchstreckt und innenseitig mit einem umlaufenden Absatz 25 unter Zwischenschaltung eines Dichtelements 23 an der Behälterinnenwand anliegt. Zur Festlegung des Saugers 2 an dem Grundkörper 5 der Saugvorrichtung 1 dient ein als Ventilmutter 8 ausgebildetes Befestigungselement, welche in der Gebrauchslage gegen die Außenseite des Tränkebehälters 18 auf ein Außengewinde 14 des Grundkörpers 5 aufgeschraubt ist. In der Gebrauchslage zieht die Ventilmutter 8 den Grundkörper 5 mit dem Absatz 25 unter Zwischenschaltung des Dichtelements 23 gegen die Behälterinnenwand, wobei die Ventilmutter 8 dabei mit ihrer dem Grundkörper 5 zugewandten Stirnseite außenseitig an dem Tränkebehälter 18 anliegt.

Die Ventilmutter 8 dient darüber hinaus zur Festlegung des Saugers 2 an dem Grundkörper 5. In der Gebrauchslage ist die Ventilmutter 8 koaxial zu einem im Bereich der Eintrittsöffnung 4 angeordneten Saugerflansch 15 angeordnet. Im montierten Zustand der Ventilmutter 8 an dem Grundkörper 5 liegt ein radial in Richtung auf den Sauger 2 vorstehender Klemmvorsprung 26 der Ventilmutter 8 mit einer radial ausgerichteten Kontaktfläche an der Umfangsfläche des Saugers 2 und mit einer in Längsachsenrichtung des Saugers ausgerichteten Stirnfläche stirnseitig an dem Saugerflansch 15 an und drückt diesen gegen eine Stirnfläche des Grundkörpers 5. Dabei bewirkt die Ventilmutter 8 auch eine Anlage eines Abschnitts des Saugers 5 im Bereich der Eintrittsöffnung 4 an einem Saugerabschnitt 11 eines Basiselements 24 einer Ventileinheit 9.

Das Basiselement 24 der Ventileinheit 9 weist neben dem Saugerabschnitt 11 zur koaxialen Anordnung des Saugers 2 einen Grundkörperabschnitt 10 auf, welcher im Bereich der Auslassöffnung 7 des Grundkörpers 5 innerhalb einer Ausnehmung 13 des Grundkörpers 5 angeordnet ist. Die dem Grundkörper 5 zugewandte Stirnfläche des Saugerflanschs 15 liegt in der Gebrauchslage sowohl an einem den Saugerabschnitt 11 von dem Grundkörperabschnitt 10 abgrenzenden Absatz des Basiselements 9 als auch an der Stirnfläche des Grundkörpers 5 im Bereich der Auslassöffnung 7 an.

Die Ventileinheit 9 ist über einen als Filmscharnier 17 ausgebildeten Verbindungsabschnitt mit einem kugelkalottenförmige Klappe 20 ausgebildeten Ventilelement verbunden. Das Ventilelement 20 ist dabei derart ausgebildet, dass es mit seinem kalottenförmigen Abschnitt in der Gebrauchslage eine Zuführkanalaustrittsöffnung 16 eines sich ausgehend von einer Einlassöffnung 6 bis in die Ausnehmung 13 erstreckenden Längskanals 22 flüssigkeitsdicht verschließt.

Das Filmscharnier 17, welches einstückig mit dem Ventilelement 20 und dem Basiselement 24 aus dem gleichen Material gefertigt ist, besitzt eine Dicke, die eine Flexibilität des Filmscharniers 17 bietet, sodass das Ventilelement 20 durch eine Verbiegung des Filmscharniers 17 aus der in Figur 3 dargestellten Schließstellung in eine hier nicht dargestellte Öffnungsstellung verschwenkt werden kann, wobei das Filmscharnier 17 elastisch verformt wird.

Infolge des beim Saugen entstehenden Unterdrucks wird eine Verlagerung des Ventilelements 20 aus der in Figur 3 dargestellten Sperrstellung in eine hier nicht dargestellte Freigabestellung verstellt, in der die Zuführkanalaustrittsöffnung 16 freigegeben wird, sodass Tränkeflüssigkeit über den Längskanal 22 durch die Ausnehmung 13 bis zur Austrittsöffnung 3 des Saugers strömen kann. Sobald kein Unterdruck mehr im Sauger 2 erzeugt wird oder aufgrund einer Saugerkompression ein erhöhter Flüssigkeitsdruck innerhalb des Saugers 2 herrscht, erfolgt eine Rückverlagerung des Ventilelements 20 in die in Figur 3 dargestellte Sperrstellung, in der das Ventilelement 20 zuverlässig die Zuführkanalaustrittsöffnung 16 verschließt und somit eine Rückströmung von Tränkeflüssigkeit in den Tränkeeimer 18 verhindert.

### Bezugszeichenliste

- 1: Säugvorrichtung
- 2: Sauger
- 3: Austrittsöffnung
- 4: Eintrittsöffnung
- 5: Grundkörper
- 6: Einlassöffnung
- 7: Auslassöffnung
- 8: Befestigungselement/Ventilmutter
- 9: Ventileinheit
- 10: Grundkörperabschnitt
- 11: Saugerabschnitt
- 13: Ausnehmung
- 14: Außengewinde
- 15: Saugerflansch
- 16: Zuführkanalaustrittsöffnung
- 17: Verbindungsabschnitt/Filmscharnier
- 18: Tränkebehälter
- 19: Behälteröffnung
- 20: Ventilelement/Klappe
- 22: Längskanal
- 23: Dichtelement
- 24: Basiselement
- 25: Absatz
- 26: Klemmvorsprung

## Patentansprüche

1. Säugvorrichtung zur Verbindung mit einem Tränkebehälter, insbesondere einem Tränkeeimer, mit
- einem Sauger (2) mit einer Austrittsöffnung (3) und einer Eintrittsöffnung (4),
- einem Grundkörper (5) mit einer Einlassöffnung (6) und einer Auslassöffnung (7),
- einem Befestigungselement (8) zur lösbaren Festlegung des mit seiner Eintrittsöffnung (4) im Bereich der Auslassöffnung (7) des Grundkörpers (5) angeordneten Saugers (2) an dem Grundkörper (5) und
- einer einen Flüssigkeitsstrom in Richtung auf die Austrittsöffnung (3) freigebenden und in Richtung auf die Einlassöffnung (6) blockierenden Ventileinheit (9),
**dadurch gekennzeichnet, dass**
die Ventileinheit (9) ein Basiselement (24) aufweist, dass
- mit einem Grundkörperabschnitt (10) innerhalb einer an die Auslassöffnung (7) angrenzenden Ausnehmung (13) angeordnet ist und
- mit einem zwischen einer eine Zuführkanalaustrittsöffnung (16) verschließenden Sperrstellung und einer die Zuführkanalaustrittsöffnung freigebenden Öffnungsstellung verstellbaren Ventilelement (20) verbunden ist.

2. Säugvorrichtung nach Anspruch 1, **dadurch gekennzeichnet, dass** das Basiselement (24) mit einem Saugerabschnitt (11) im Bereich der Eintrittsöffnung (4) innerhalb des Saugers (2) angeordnet ist.

3. Säugvorrichtung nach Anspruch 1 oder 2, **dadurch gekennzeichnet, dass** das Ventilelement (20) in Richtung auf die Schließstellung vorgespannt ist.

4. Säugvorrichtung nach einem oder mehreren der vorhergehenden Ansprüche, **dadurch gekennzeichnet, dass** das Ventilelement (20) als an die Zuführkanalaustrittsöffnung (16) angepasste Klappe ausgebildet ist.

5. Säugvorrichtung nach einem oder mehreren der vorhergehenden Ansprüche, **gekennzeichnet durch** ein flexibles Verbindungselement (17), das einenends mit dem Ventilelement (20) und anderenends mit dem Basiselement (24) verbunden ist.

6. Säugvorrichtung nach einem oder mehreren der vorhergehenden Ansprüche, **dadurch gekennzeichnet, dass** das flexible Verbindungselement (17) das Ventilelement (20) in Richtung auf die Schließstellung vorspannt.

7. Säugvorrichtung nach einem oder mehreren der vorhergehenden Ansprüche, **dadurch gekennzeichnet, dass** das flexible Verbindungselement (17) zur Verstellung des Ventilelements (20) aus der Schließstellung in die Öffnungsstellung elastisch verformbar, insbesondere biegbar ist.

8. Säugvorrichtung nach einem oder mehreren der vorhergehenden Ansprüche, **dadurch gekennzeichnet, dass** das Basiselement (24) und das Ventilelement (20), bevorzugt das Basiselement (24), das Ventilelement (20) und das flexible Verbindungselement (17) einstückig ausgebildet sind, insbesondere nach Art eines Filmscharniers.

9. Säugvorrichtung nach einem oder mehreren der vorhergehenden Ansprüche, **dadurch gekennzeichnet, dass** das Basiselement (24), das Ventilelement (20) und das flexible Verbindungselement (17) einstückig im Spritzgussverfahren hergestellt sind.

10. Säugvorrichtung nach einem oder mehreren der vorhergehenden Ansprüche, **dadurch gekennzeichnet, dass** das Ventilelement (20) einen an die Zuführkanalaustrittsöffnung (16) angepassten, kugelkalottenförmigen Abschnitt aufweist.
